# EUROPEAN PATENT APPLICATION

(11) **EP 2 902 611 A1**
(43) Date of publication of application: **05.08.2015**
(21) Application number: 14425007.3
(22) Date of filing: 29.01.2014
(51) Int. Cl.: F02M 27/04, C02F 1/46, C02F 1/461

(54) **Device for transmission of electrical currents into hydraulic circuits, particularly suitable for polarization and/or spatial reconfiguration of molecules**

(71) Applicant: Castiel srl, 40121 Bologna (IT)
(72) Inventor: Caputo, Gianluca, 00165 Roma (IT); Colaiacovo, Luigi, 51100 Pistoia (IT)
(74) Representative: Zizzari, Massimo

(57) **Abstract**

Device (100) for transmission of an electrical current into a hydraulic circuit, particularly suitable for polarization and/or spatial rearrangement of molecules, characterized in that comprising:
- a connection element (106) placed in between a tract of a pipeline belonging to a hydraulic circuit, wherein a fluid flows from an input end (104) to an output end (105);
- a first electrode (103), longitudinally inserted into said pipeline wherein said fluid flows, and that is connected at one end (101) to the outer side of said connection element (106), preferably through a nut and bolt coupling, instead the other end is free on the central axis of said pipeline; said first electrode (103) is electrically isolated in respect to said connection element (106) by a proper isolating element, preferably made of a plastic material;
- a second electrode (102), placed on the outer surface of said pipeline, wherein said fluid flows, that is connected at one end to the outside of said connection element (106), preferably through a nut and bolt coupling, and at the other end to the inner surface of said pipeline;
- a control unit, including a power supply, and a circuit able to generate and modulate some respective electrical signals addressed, through proper cables connected to said respective nut and bolt couplings, respectively to the end (101) of said first electrode (103) and to the end of said second electrode (102),

so that an electric potential difference is achieved at said electrodes (102, 103) and so that a flow of transverse electrical current can be obtained, going from said first electrode (103) to said second electrode (102), passing through said fluid, and causing the polarization and/or the spatial reconfiguration of the molecules belonging to the same fluid.

## Description

The present invention regards a device that can be applied to a *tract* of a pipeline belonging to a hydraulic circuit, and that is able to transmit an electrical current to a fluid that flows inside the circuit.
More in particular, the device includes an electrode that is inserted inside a pipeline wherein a fluid is flowing, and another electrode on the outer surface of the same pipeline, so that the application of an electrical potential difference can achieve an electrical current and therefore a polarization and/or a spatial rearrangement of the molecules of the same fluid.
This device has been designed especially for two specific purposes:
- in the field of the combustion processes, in order to rearrange the molecules of hydrocarbons in the fuel supply pipeline and to achieve an improvement in efficiency of the chemical combustion process;
- in the field of the treatment of water, in order to rearrange the molecules of dissolved salts and therefore to avoid the the generation and sedimentation of limestone, or to polarize the molecules of limestone and make them to react in order to achieve calcium hydrogen carbonate soluble in water.

As known, in internal combustion engines a chemical exothermic reaction is achieved, involving the molecules of hydrocarbons (*fuel*) and the molecules of oxygen *(comburent),* in order to free energy that is used as a mechanical energy, obtaining some products from reaction that are expelled as a waste gas. In the internal combustion engines the iso-octane reacts with oxygen in order to obtain carbon dioxide and steam:

*C*₈*H*₁₈ + 12.5 *O*₂ → 8*CO*₂ + 9 *H*₂*O*

Indeed, the real combustion process does not follow the ideal process, because the fuel is made of a mix of different types of hydrocarbons, and their molecules are bonded in many ways and oriented in space according to many casual directions. Often the molecules create some aggregated structures *(clusters)* that are closed on themselves and do not permit any interaction with the oxygen.
An ideal combustion process should have the molecules of fuel all aligned along a specific direction, so that a fast and efficient reaction with oxygen can be achieved. Instead, in the real process what happens is that only a part of the molecules react to the combustion process, achieving therefore a mechanical energy that is lower to the ideal one, further generating a higher quantity of waste gas that increases significantly the pollution in the environment.
The device of the present invention, by applying an electric potential difference, interacts with the molecules of hydrocarbons and achieves their realignment, or it allows the breaking up of their aggregated structures (*clusters*)*,* causing a homogeneous spatial rearrangement of molecules that react more efficiently with molecules of oxygen.
This circumstance improves the efficiency of the combustion process in said engine, decreases significantly the fuel consumption at a specific power output, and increases the engine performance at a specific level of revolutions per minute (rpm).

In case, instead, of hydraulic pipelines, it is known that the calcium salts and magnesium salts dissolved in water as hydrogen carbonate soluble, with an increase of temperature, can generate carbonates that are not soluble, and therefore create some aggregates of materials that constitute the sediments of limestone.

The device of the present invention, by applying again an electrical potential difference, allows the dissociation of molecules of calcium carbonate into positive ions and negative ions:

*CaCO₃* → *Ca* ⁺⁺ + *CO₃*⁻⁻

therefore leading to reaction that generates calcium hydrogen carbonate, that is soluble in water:

*CaCO*₃ + *CO*₂ + *H*₂*O → Ca*(*HCO*₃*)*₂

In such a way, by applying said device to hydraulic plants and machines, it is possible to avoid the generation and sedimentation of limestone, and therefore it is possible to avoid all the problems arising from the occlusion of pipelines and damage to the mechanical parts of the same machines.
Therefore, a unique device properly adapted and arranged for the specific application, working on the same principle of generation and transmission of an electric current inside an hydraulic circuit, is able to solve two technical problems: respectively the improvement in efficiency of the combustion process, and the prevention of the generation and sedimentation of limestone in the water.

In the state of the art, the problem of improving the efficiency in the combustion process has been studied and some solutions have been proposed, mainly based on the addition of chemical additives to the fuel, and based on the application of permanent magnets on the fuel supply pipelines. However, these solutions do not lead to significant advantages because the improvement in the efficiency results to be very low. Instead, the device of the present invention achieves, for example in the car engines, a saving of at least the 20% of fuel at the same engine power output.

Furthermore, in the state of the art, the problem of avoiding the sedimentation of limestone in plants and hydraulic machines has been studies and some solutions have been proposed, like in example: the addition of chemical additives, softeners and resins that achieve a ionic exchange in calcium and sodium, the application of permanent magnets able to transform calcite to aragonite, the use of positive and negative electrodes directly in the water. However, all the above solutions work for a small amount of time, involve some high costs for management and maintenance, and usually affect the state of healthy in case of drinkable water.

Therefore, the main objective of the present invention is to overcome all the above drawbacks from the prior art, and to propose a device that can be easily and properly installed in a hydraulic circuit where a fluid is flowing inside, and that is able to generate and transmit an electrical current into the same fluid, so that a polarization and/or a spatial rearrangement of the molecules of the same fluid can be achieved; this fact in case of hydrocarbons leads to a more ordered and aligned orientation of molecules, that achieves an improvement in the combustion process; instead, in case of water plants and circuits, it leads to a prevention of generation and sedimentation of the limestone.

Another objective of the invention is that, in case the device is applied to a fuel supply pipeline of an internal combustion engine in a car vehicle, it improves the efficiency of the combustion process in said engine, decreases significantly the fuel consumption at a specific power output, and increases the engine performance at a specific level of revolutions per minute (rpm).

Another further objective of the invention is that, in case the device is applied to hydraulic circuits of plants and machines, it avoids the generation and sedimentation of limestone, and therefore it avoids all the problems arising from the occlusion of pipelines and damage to the mechanical parts of the same machines.

Another further objective of the invention is that, in case the device is applied to a circuit where a gas is flowing inside instead of a liquid, like in example the circuits supplying boilers and electrical generators, it achieves again the spatial rearrangement of the gas molecules of hydrocarbons, that leads to an improvement of the global efficiency in the combustion process.

Therefore it is specific subject of the present invention a device for transmission of an electrical current into a hydraulic circuit, particularly suitable for polarization and/or spatial rearrangement of molecules, characterized in that comprising:
- a connection element placed in between a tract of a pipeline belonging to a hydraulic circuit, wherein a fluid flows coming from an input end going to an output end;
- a first electrode, longitudinally inserted into said pipeline wherein said fluid flows, and that is connected at one end to the outer side of said connection element, preferably through a nut and bolt coupling, instead the other end is free on the central axis of said pipeline; said first electrode is electrically isolated in respect to said connection element by a proper isolating element, preferably made of a plastic material;
- a second electrode, placed on the outer surface of said pipeline, wherein said fluid flows, that is connected at one end to the outside of said connection element, preferably through a nut and bolt coupling, and at the other end to the inner surface of said pipeline;
- a control unit, including a power supply, and a circuit able to generate and modulate some respective electrical signals addressed, through proper cables connected to said respective nut and bolt couplings, respectively to the end of said first electrode and to the end of said second electrode,
so that an electric potential difference is achieved at said electrodes and so that a flow of transverse electrical current can be obtained, going from said first electrode to said second electrode, passing through said fluid, and causing the polarization and/or the spatial rearrangement of the molecules belonging to the same fluid.

The present invention will now be described for illustrative but not limitative purposes, according to its preferred embodiments, with particular reference to figures of the enclosed drawings, wherein:
**Figure 1** is a perspective view of a device for transmission of an electrical currents into hydraulic circuits, according to a first embodiment of the present invention;
**Figure 2** is a lateral view of the same device of Figure 1;
**Figure 3** is a front view of the same device of Figure 1;
**Figure 4** is a perspective view of a device for transmission of an electrical currents into hydraulic circuits, according to a second embodiment of the present invention;
**Figure 5** is a lateral view of the same device of Figure 4;
**Figure 6** is a front view of the same device of Figure 4;
**Figure 7** is a perspective view of a device for transmission of an electrical currents into hydraulic circuits, according to a third embodiment of the present invention;
**Figure 8** is a lateral view of the same device of Figure 7;
**Figure 9** is a front view of the same device of Figure 7;
**Figure 10** is a schematic block view of the control unit belonging to the device of the present invention;
**Figure 11** is a schematic view of a molecule of hydrocarbons, including the molecular bonds;
**Figure 12** is a view of a diagram related to experiments and representing the engine power in a car vehicle, as a function of the revolutions per minute (rpm), with and without the device of the present invention;
**Figure 13** is a view of a set of diagrams related to experiments and representing the number of kilometers run per liter of fuel, in the urban, extra-urban and mixed cycle, with and without the device of the present invention.

It is here underlined that only few of the many conceivable embodiments of the present invention are described, which are just some specific non-limiting examples, having the possibility to describe many other embodiments based on the disclosed technical solutions of the present invention.

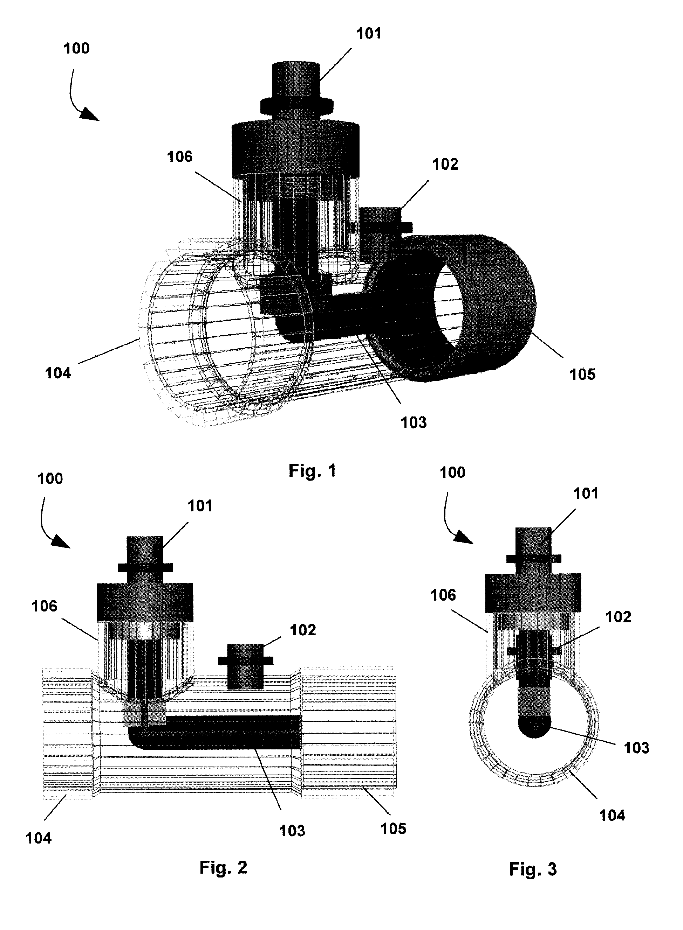

**Figures 1-3** show a device **100** for transmission of an electrical current into a hydraulic circuit, according to a first embodiment of the present invention.
In particular, the device **100** includes a connection element **106** placed in between a *linear* tract of a pipeline belonging to a hydraulic circuit, wherein a fluid flows coming from an input end **104** going to an output end **105.**
A first electrode **103** is longitudinally inserted into said pipeline wherein said fluid flows, and is connected at one end **101** by a 90 *degrees curved profile* to the outer side of said connection element **106,** instead the other end is free on the central axis of said pipeline. Said first electrode **103** is electrically isolated in respect to said connection element **106** by a proper isolating element, preferably made of a plastic material. A second electrode **102,** placed on the outer surface of said pipeline wherein said fluid flows, is connected at one end to the outside of said connection element **106,** and at the other end to the inner surface of said pipeline.
Both the first electrode **103** and the second electrode **102** have an external end, preferably including a nut and bolt coupling.
The device **100** further includes a control unit, including a power supply and a circuit able to generate and modulate some respective electrical signals. The electrical signals are addressed, through proper cables connected to said respective nut and bolt couplings, respectively to the end **101** of said first electrode **103** and to the end of said second electrode **102.**
In such a way, an electric potential difference is achieved at said electrodes **102, 103** and therefore a flow of transverse electrical current can be obtained, going from said first electrode **103** to said second electrode **102,** passing through said fluid, and causing the polarization and/or the spatial rearrangement of the molecules belonging to the same fluid.

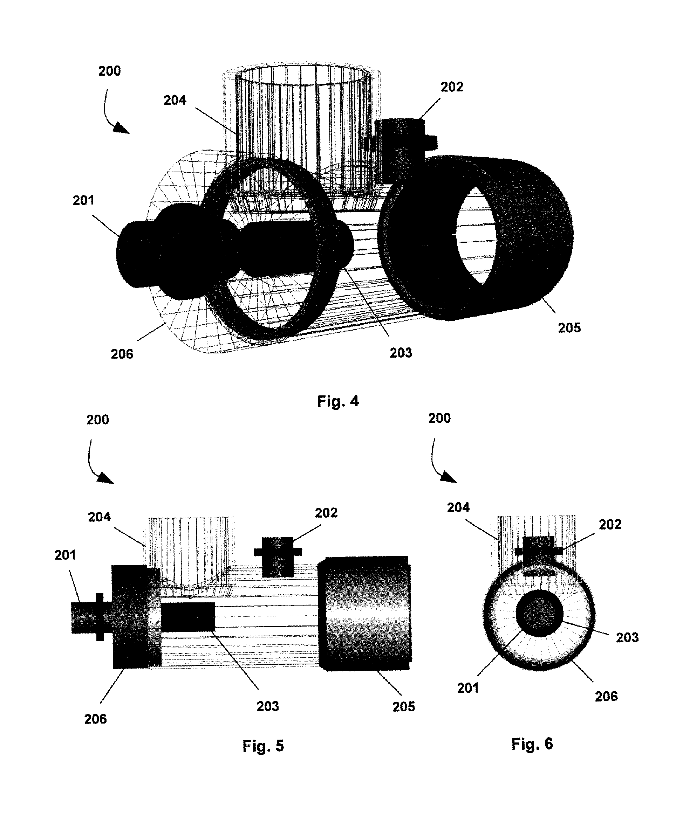

**Figures 4-6** show a device **200** for transmission of an electrical current into a hydraulic circuit, according to a second embodiment of the present invention.
It includes a connection element **206** placed in between a *90 degrees curved tract* of a pipeline belonging to a hydraulic circuit, wherein a fluid flows coming from an input end **204** going to an output end **205.**
A first electrode **203** is longitudinally inserted into said pipeline wherein said fluid flows, and is *laterally* connected at one end **201** to the outer side of said connection element **206,** instead the other end is *linear* and free on the central axis of said pipeline. Said first electrode **203** is electrically isolated in respect to said connection element **206** by a proper isolating element, preferably made of a plastic material. A second electrode **202,** placed on the outer surface of said pipeline wherein said fluid flows, is connected at one end to the outside of said connection element **206,** and at the other end to the inner surface of said pipeline.
Both the first electrode **203** and the second electrode **202** have an external end, preferably including a nut and bolt coupling.
Also in this case, the device **200** further includes a control unit, including a power supply and a circuit able to generate and modulate some respective electrical signals. The electrical signals are addressed, through proper cables connected to said respective nut and bolt couplings, respectively to the end **201** of said first electrode **203** and to the end of said second electrode **202.**
In such a way, an electric potential difference is achieved at said electrodes **202, 203** and therefore a flow of transverse electrical current can be obtained, going from said first electrode **203** to said second electrode **202,** passing through said fluid, and causing the polarization and/or the spatial rearrangement of the molecules belonging to the same fluid.

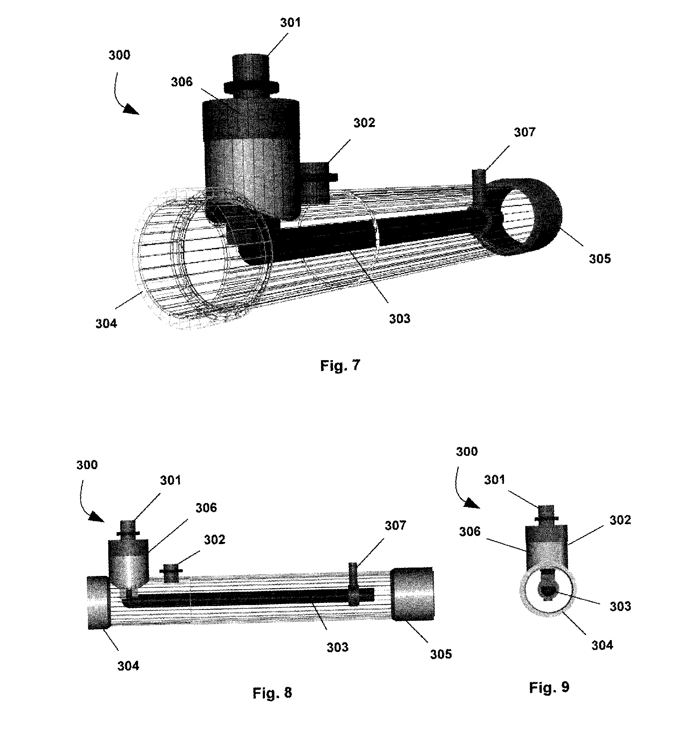

**Figures 7-9** show a device **300** for transmission of an electrical current into a hydraulic circuit, according to a third embodiment of the present invention.
It includes a connection element **306** placed in between a *linear tract* of a pipeline belonging to a hydraulic circuit, wherein a fluid flows coming from an input end **304** going to an output end **305.**
A first electrode **303** is longitudinally inserted into said pipeline wherein said fluid flows, and is connected at one end **301** by a *90 degrees curved profile* to the outer side of said connection element **306,** instead the other end is *linear* and free on the central axis of said pipeline. The other end extends itself at a long distance, so that a supporting element **307** is necessary in order to keep the direction of the central axis of said pipeline.
Said first electrode **303** is electrically isolated in respect to said connection element **306** by a proper isolating element, preferably made of a plastic material.
A second electrode **302** is placed on the outer surface of said pipeline, wherein said fluid flows, and is connected at one end to the outside of said connection element **306,** and at the other end to the inner surface of said pipeline.
Both the first electrode **303** and the second electrode **302** have an external end, preferably including a nut and bolt coupling.
Also in this case, the device **300** further includes a control unit, including a power supply, and a circuit able to generate and modulate some respective electrical signals addressed, through proper cables connected to said respective nut and bolt couplings, respectively to the end **301** of said first electrode **303** and to the end of said second electrode **302.**
In such a way, an electric potential difference is achieved at said electrodes **302, 303,** and therefore a flow of transverse electrical current can be obtained, going from said first electrode **303** to said second electrode **302,** passing through said fluid, and causing the polarization and/or the spatial rearrangement of the molecules belonging to the same fluid.

In case that said device is applied to a fuel supply pipeline of an internal combustion engine in a car vehicle, it interacts with the molecules of the hydrocarbons.

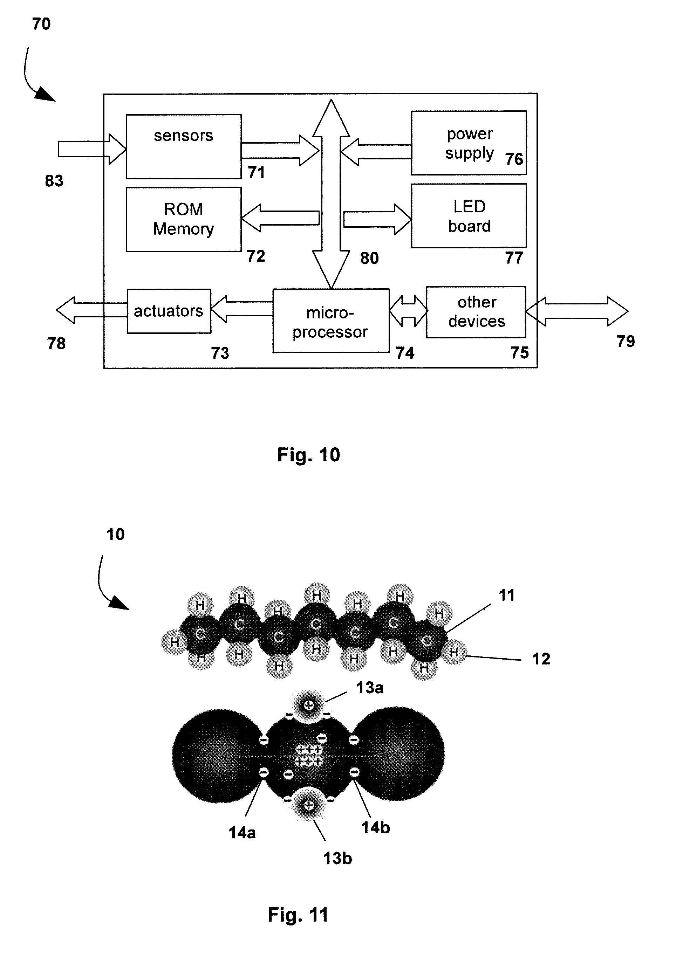

**Figure 11** shows an example of a molecule **10** of hydrocarbons where it is represented the position of atoms of hydrogen **12,** bonded to atoms of carbon **11,** with respective electrons **14a, 14b.** The application of an electrical current permits a rearrangement of molecules, or it allows the breaking up of their aggregated structures (*clusters*)*,* causing a homogeneous spatial rearrangement of molecules that react more efficiently with molecules of oxygen, according to the formula:

*C*₈*H*₈ + 12.5 *O*₂ → 8*CO*₂ + 9*H*₂*O*

This circumstance improves the efficiency of the combustion process in said engine, decreases significantly the fuel consumption at a specific power output, and increases the engine performance at a specific level of revolutions per minute (rpm).

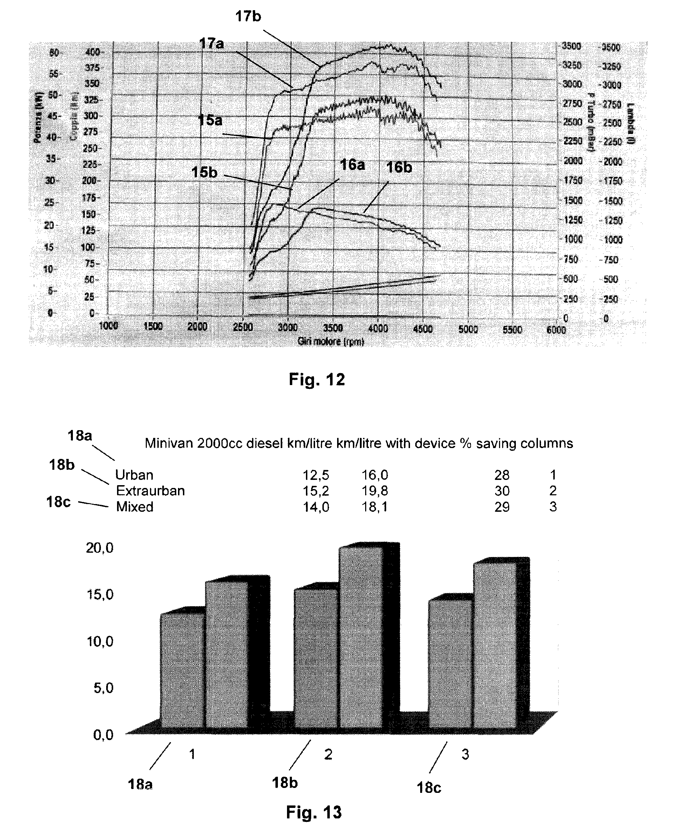

**Figures 12-13** show the results of some experiments on the engine of a VW POLO TDI 1.4 vehicle, with and without the device of the present invention.
In **Figure 12** there is evidence that the application of the device achieves a higher mechanical force at a lower level of revolutions per minute (rpm).
In fact, the *maximum power on the engine shaft,* at a specific level of revolutions per minute (rpm), is higher in the curve **17a** where the device is installed, in respect to the curve **17b** where the device is absent. In the same way, the *maximum power on the wheel* is higher in the curve **15a** where the device is installed, in respect to the curve **15b** where the device is absent. Further, the force on the engine shaft is higher in the curve **16a** where the device is installed, in respect to the curve **16b** where the device is absent.
With reference to the average consumption of fuel, **figure 13** shows that the number of kilometers run with a liter of fuel is always higher in case of device that is installed (column at the right) in respect to the case where the device is absent (column at the left). And this fact is evident in the urban cycle **18a,** saving approximately the 28% of fuel, in the extra-urban cycle **18b,** saving approximately the 30% of fuel, and in the mixed cycle **18c,** saving approximately the 29% of fuel.

In case the device of the invention is applied to hydraulic circuits of plants and machines, by applying an electric potential difference, it allows the dissociation of molecules of calcium carbonate into positive ions and negative ions:

*CaCO*₃ → *Ca ⁺⁺ + CO₃⁻⁻*

therefore leading to reaction that generates calcium hydrogen carbonate, that is soluble in water: *CaCO*₃ + *CO*₂ + *H*₂*O → Ca*(*HCO*₃*)*₂
In such a way, by applying said device to hydraulic plants and machines, it is possible to avoid the generation and sedimentation of limestone, and therefore it is possible to avoid all the problems arising from the occlusion of pipelines and damage to the mechanical parts of the same machines.

**Figure 10** shows a block diagram of a control unit 70 belonging to the device of the present invention, according to one of the above described embodiments.
It includes a microprocessing unit **74** that receives as input the chemical-physical parameters coming and encoded by external sensors **71,** applies an algorithm encoded by a software embedded in a ROM memory **72,** and achieves a specific profile of said electric signal that is generated by actuators **73** and it is transmitted towards said first and second electrodes.

According to another embodiment of the present invention, the device is applied to a circuit where a gas is flowing inside instead of a liquid, like in example the circuits supplying boilers and electrical generators where a methane gas could flow inside. Either in this case, the installation of the device, and therefore the application of an electric potential difference, achieves the spatial rearrangement of the gas molecules of hydrocarbons, that leads to an improvement of the global efficiency in the combustion process.

Therefore, the above examples show that the present invention achieves all the proposed objectives. In particular, it permits to obtain a device that can be easily and properly installed in a hydraulic circuit where a fluid is flowing inside, and that is able to generate and transmit an electrical current into the same fluid, so that a polarization and/or a spatial rearrangement of the molecules of the same fluid can be achieved; this fact in case of hydrocarbons leads to a more ordered and aligned orientation of molecules, that achieves an improvement in the combustion process; instead, in case of water plants and circuits, it leads to a prevention of generation and sedimentation of the limestone.

Then, according to the invention, in case the device is applied to a fuel supply pipeline of an internal combustion engine in a car vehicle, it improves the efficiency of the combustion process in said engine, decreases significantly the fuel consumption at a specific power output, and increases the engine performance at a specific level of revolutions per minute (rpm).

Furthermore, in case the device is applied to hydraulic circuits of plants and machines, it avoids the generation and sedimentation of limestone, and therefore it avoids all the problems arising from the occlusion of pipelines and damage to the mechanical parts of the same machines.

Again, according to the invention, in case the device is applied to a circuit where a gas is flowing inside instead of a liquid, like in example the circuits supplying boilers and electrical generators, it achieves again the spatial rearrangement of the gas molecules of hydrocarbons, that leads to an improvement of the global efficiency in the combustion process.

The present invention has been described for illustrative but not limitative purposes, according to its preferred embodiments, but it is clear that modifications and/or changes can be introduced by those skilled in the art without departing from the relevant scope, as defined in the enclosed claims.

## Claims

1. Device (100) for transmission of an electrical current into a hydraulic circuit, particularly suitable for polarization and/or spatial rearrangement of molecules, **characterized in that** comprising:
- a connection element (106) placed in between a *linear* tract of a pipeline belonging to a hydraulic circuit, wherein a fluid flows coming from an input end (104) going to an output end (105);
- a first electrode (103), longitudinally inserted into said pipeline wherein said fluid flows, and that is connected at one end (101) by a 90 degrees *curved profile* to the outer side of said connection element (106), preferably through a nut and bolt coupling, instead the other end is free on the central axis of said pipeline; said first electrode (103) is electrically isolated in respect to said connection element (106) by a proper isolating element, preferably made of a plastic material;
- a second electrode (102), placed on the outer surface of said pipeline, wherein said fluid flows, that is connected at one end to the outside of said connection element (106), preferably through a nut and bolt coupling, and at the other end to the inner surface of said pipeline;
- a control unit, including a power supply, and a circuit able to generate and modulate some respective electrical signals addressed, through proper cables connected to said respective nut and bolt couplings, respectively to the end (101) of said first electrode (103) and to the end of said second electrode (102),
so that an electric potential difference is achieved at said electrodes (102, 103) and so that a flow of transverse electrical current can be obtained, going from said first electrode (103) to said second electrode (102), passing through said fluid, and causing the polarization and/or the spatial rearrangement of the molecules belonging to the same fluid.

2. Device (200) for transmission of an electrical current into a hydraulic circuit, according to previous claim 1, **characterized in that** comprising:
- a connection element (206) placed in between a *90 degrees curved tract* of a pipeline belonging to a hydraulic circuit, wherein a fluid flows coming from an input end (204) going to an output end (205);
- a first electrode (203), longitudinally inserted into said pipeline wherein said fluid flows, and that is *laterally* connected at one end (201) to the outer side of said connection element (206), preferably through a nut and bolt coupling, instead the other end is *linear* and free on the central axis of said pipeline; said first electrode (203) is electrically isolated in respect to said connection element (206) by a proper isolating element, preferably made of a plastic material;
- a second electrode (202), placed on the outer surface of said pipeline, wherein said fluid flows, that is connected at one end to the outside of said connection element (206), preferably through a nut and bolt coupling, and at the other end to the inner surface of said pipeline;
- a control unit, including a power supply, and a circuit able to generate and modulate some respective electrical signals addressed, through proper cables connected to said respective nut and bolt couplings, respectively to the end (201) of said first electrode (203) and to the end of said second electrode (202),
so that an electric potential difference is achieved at said electrodes (202, 203) and so that a flow of transverse electrical current can be obtained, going from said first electrode (203) to said second electrode (202), passing through said fluid, and causing the polarization and/or the spatial rearrangement of the molecules belonging to the same fluid.

3. Device (300) for transmission of an electrical current into a hydraulic circuit, according to previous claim 1, **characterized in that** comprising:
- a connection element (306) placed in between a *linear tract* of a pipeline belonging to a hydraulic circuit, wherein a fluid flows coming from an input end (304) going to an output end (305);
- a first electrode (303), longitudinally inserted into said pipeline wherein said fluid flows, and that is connected at one end (301) by a *90 degrees curved profile* to the outer side of said connection element (306), preferably through a nut and bolt coupling, instead the other end is *linear* and free on the central axis of said pipeline; the other end extends itself at a long distance, so that a supporting element (307) is necessary in order to keep the direction of the central axis of said pipeline; said first electrode (303) is electrically isolated in respect to said connection element (306) by a proper isolating element, preferably made of a plastic material;
- a second electrode (302), placed on the outer surface of said pipeline, wherein said fluid flows, that is connected at one end to the outside of said connection element (306), preferably through a nut and bolt coupling, and at the other end to the inner surface of said pipeline;
- a control unit, including a power supply, and a circuit able to generate and modulate some respective electrical signals addressed, through proper cables connected to said respective nut and bolt couplings, respectively to the end (301) of said first electrode (303) and to the end of said second electrode (302),
so that an electric potential difference is achieved at said electrodes (302, 303) and so that a flow of transverse electrical current can be obtained, going from said first electrode (303) to said second electrode (302), passing through said fluid, and causing the polarization and/or the spatial rearrangement of the molecules belonging to the same fluid.

4. Device for transmission of an electrical current into a hydraulic circuit, according to one of previous claims from 1 to 3, **characterized in that**:
- said device is applied to a fuel supply pipeline of an internal combustion engine in a car vehicle,
so that, by applying an electric potential difference, it interacts with the molecules of hydrocarbons and achieves their realignment, or it allows the breaking up of their aggregated structures *(clusters),* causing a homogeneous spatial rearrangement of molecules that react more efficiently with molecules of oxygen, according to the formula:
*C*₈*H*₁₈ + 12.5*O*₂ → 8*CO*₂ + 9*H*₂*O*
this circumstance improves the efficiency of the combustion process in said engine, decreases significantly the fuel consumption at a specific power output, and increases the engine performance at a specific level of revolutions per minute (rpm).

5. Device for transmission of an electrical current into a hydraulic circuit, according to one of previous claims from 1 to 3, **characterized in that**:
- said device is applied to hydraulic circuits of plants and machines,
so that, by applying an electric potential difference, it allows the dissociation of molecules of calcium carbonate into positive ions and negative ions:
*CaCO*₃ → *Ca* ⁺⁺ + *CO*₃⁻⁻
therefore leading to reaction that generates calcium hydrogen carbonate, that is soluble in water:
*CaCO*₃ + *CO*₂ + *H*₂*O* → *Ca*(*HCO₃*)₂
so that, by applying said device to hydraulic plants and machines, it is possible to avoid the generation and sedimentation of limestone, and therefore it is possible to avoid all the problems arising from the occlusion of pipelines and damage to the mechanical parts of the same machines.

6. Device for transmission of an electrical current into a hydraulic circuit, according to one or more of previous claims, **characterized in that**:
- said control unit (70) includes a microprocessing unit (74) that receives as input the chemical-physical parameters coming and encoded by external sensors (71), applies an algorithm encoded by a software embedded in a ROM memory (72), and achieves a specific profile of said electric signal that is generated by actuators (73) and it is transmitted towards said first and second electrodes.

7. Device for transmission of an electrical current into a hydraulic circuit, according to one or more of previous claims, **characterized in that**:
- in case said device is applied to a circuit where a gas is flowing inside instead of a liquid, like in example the circuits supplying boilers and electrical generators, it allows the spatial rearrangement of the gas molecules of hydrocarbons, that leads to an improvement of the global efficiency in the combustion process.
